# FASCICULE DE BREVET EUROPEEN

(11) **EP 0 916 489 B1**
(45) Date de publication et mention de la délivrance du brevet: **02.01.2002**
(21) Numéro de dépôt: 98120815.0
(22) Date de dépôt: 03.11.1998
(51) Int. Cl.: B41F 19/06

(54) **Dispositif pour le positionnement et la fixation d'outils sur une plaque de support et de chauffage**
Vorrichtung zum Ausrichten und Festlegen von Werkzeugen auf eine Heiz- und Trägerplatte
Device for positioning and fixing tools on a heating and supporting plate

(30) Priorité: 17.11.1997 CH 265097
(43) Date de publication de la demande: 19.05.1999
(73) Titulaire: BOBST S.A., 1001 Lausanne (CH)
(72) Inventeur: Rebeaud, Jean-Claude, 1052 Le Mont-sur-Lausanne (CH)
(74) Mandataire: Colomb, Claude

(56) Documents cités:
- FR-A- 1 149 797
- GB-A- 1 332 672
- US-A- 1 369 909
- US-A- 3 226 838
- US-A- 4 409 063

## Description

La présente invention se rapporte à un dispositif pour le découpage et le transfert par pression à chaud de films métalliques sur un substrat, tel que du papier ou du carton, travaillé dans une presse au moyen d'outils en forme de plaquettes positionnés sur une plaque de support et de chauffage; ce dispositif comprenant des moyens de fixation desdits outils sur ladite plaque de support et de chauffage.

On utilise déjà des plaques relativement épaisses percées d'une pluralité de rangées d'ouvertures également réparties, connues sous le nom de plaques nids d'abeilles et destinées à recevoir un certain nombre d'outils correspondant à des sortes de clichés positionnés et fixés sur la plaque de support. Cette plaque ainsi munie des clichés est montée dans une machine alimentée en découpes de carton ou de papier d'une part et en films métalliques en bandes d'autre part, pour découper et transférer à chaud des portions de films métalliques sur les découpes de carton à l'aide des outils positionnés sur la plaque de support. De telles machines sont utilisées en particulier pour l'impression sur des emballages. Le dépôt des films métalliques est souvent consécutif à une opération d'impression des découpes de carton, de sorte qu'il est important que les clichés soient positionnés avec précision pour que le dépôt des films métalliques corresponde exactement aux impressions réalisées.

Le document FR1'149'797 décrit un dispositif utilisé dans une presse pour la fabrication de livres à reliures caractérisé par des plateaux amovibles sur lesquels sont montés des gravures destinées à réaliser les décorations des reliures. Ces plateaux comportent des colonnes ou des trous qui, par emboitement, permettent de réaliser une parfaite coïncidence entre les gravures et les reliures. Les gravures sont fixées sur ces plateaux soit au moyen de vis s'engageant dans des trous filetés ménagés sur la surface desdits plateaux, soit au moyen de coins de serrage permettant un montage et un démontage rapides des gravures. Les reliures sont montées sur un autre plateau et maintenues en position au moyen de butées réglables. Les côtés de ce plateau comportent des index millimétriques servant au réglage de ces butées. L'avantage de cette invention vise à fournir un dispositif permettant de réduire les temps d'immobilisation de la machine par des jeux de plateaux interchangeables sur lesquels peuvent être préparés, à l'avance, d'autres travaux à venir.

Dans de telles presses de gaufrage et de dorure, l'une des difficultés rencontrées vient du fait que le transfert et l'impression de ces portions de films métalliques s'effectue à chaud. De ce fait, il est nécessaire de régler la position précise des clichés à la température de travail, compte tenu de la dilatation subie par la plaque de support et de chauffage entre la température ambiante et la température de travail et de la modification consécutive des positions respectives de ces clichés sur cette plaque de support et de chauffage.

Compte tenu du coût d'une telle plaque de support et de chauffage, dans laquelle les ouvertures sont des alésages de précision, il reviendrait trop cher de ne l'utiliser que pour l'impression d'un seul modèle d'emballage. Par conséquent, on utilise généralement une plaque de support et de chauffage par machine. Lorsque l'on change de travail, il est donc nécessaire de démonter les clichés de la plaque de support et de repositionner d'autres clichés en fonction du travail que l'on doit effectuer. Etant donné que les clichés travaillent à chaud, ce positionnement des clichés doit être effectué sur une plaque dont la température correspond à la température de travail. Par conséquent, ces conditions rendent le travail de positionnement difficile et extrêmement long. La durée de ce travail représente en moyenne un jour par plaque de support et de chauffage. Dans le cas de séries relativement petites à imprimer, le coût du montage se répercute évidemment plus fortement sur le coût des articles imprimés.

De plus, étant donné que la fonction de la plaque de support est non seulement de positionner les outils mais de les chauffer par contact, l'utilisation d'une plaque perforée diminue sensiblement la surface de contact par laquelle s'effectue l'échange de chaleur et réduit ainsi le rendement du chauffage de ces outils.

Le but de la présente invention est de remédier, au moins en partie, aux inconvénients susmentionnés.

A cet effet, cette invention a pour objet un dispositif pour le découpage et le transfert par pression à chaud de portions de films métalliques sur un substrat travaillé dans une presse au moyen d'outils en forme de plaque positionnés et fixés sur une plaque de support et de chauffage, selon la revendication 1.

L'avantage de ce dispositif est de ne nécessiter le montage des outils sur la plaque de support et de chauffage qu'une fois, après quoi, lorsque l'on doit changer de travail et utiliser une autre configuration de clichés, on l'enlève après usage, du châssis sur lequel elle est positionnée et fixée pour la mettre en réserve en vue d'un usage ultérieur. On la remplace alors sur la presse d'impression, par une autre plaque, celle-ci étant elle-même munie de moyens pour la positionner avec précision sur le châssis monté de façon amovible sur la presse.

De préférence, les moyens de fixation sont constitués par des vis à tête plate. Ces vis présentent, d'une part, un certain jeu avec les ouvertures traversant l'outil à fixer, destinées au passage de ces vis et d'autre part, avec le bord de chaque logement annulaire, ménagé concentriquement à chaque ouverture, pour recevoir la tête de vis. Cette disposition est destinée à permettre le positionnement de cet outil dans une certaine zone de la surface de la plaque de support et de chauffage. De ce fait, il suffit d'effectuer un premier repérage grossier de la position des clichés, après quoi un réglage précis peut être effectué grâce aux jeux entre les vis de fixation et les trous de vis ainsi qu'entre les têtes de vis et les logements annulaires entourant les trous et servant au serrage des clichés.

D'autres particularités et avantages de la présente invention apparaîtront à la lumière de la description qui va suivre et du dessin annexé qui illustre, schématiquement et à titre d'exemple, une forme d'exécution du dispositif objet de la présente invention.
La figure 1 est une vue en perspective éclatée de cette forme d'exécution;
La figure 2 est une vue partielle en coupe de la figure 1 selon la ligne A-A;

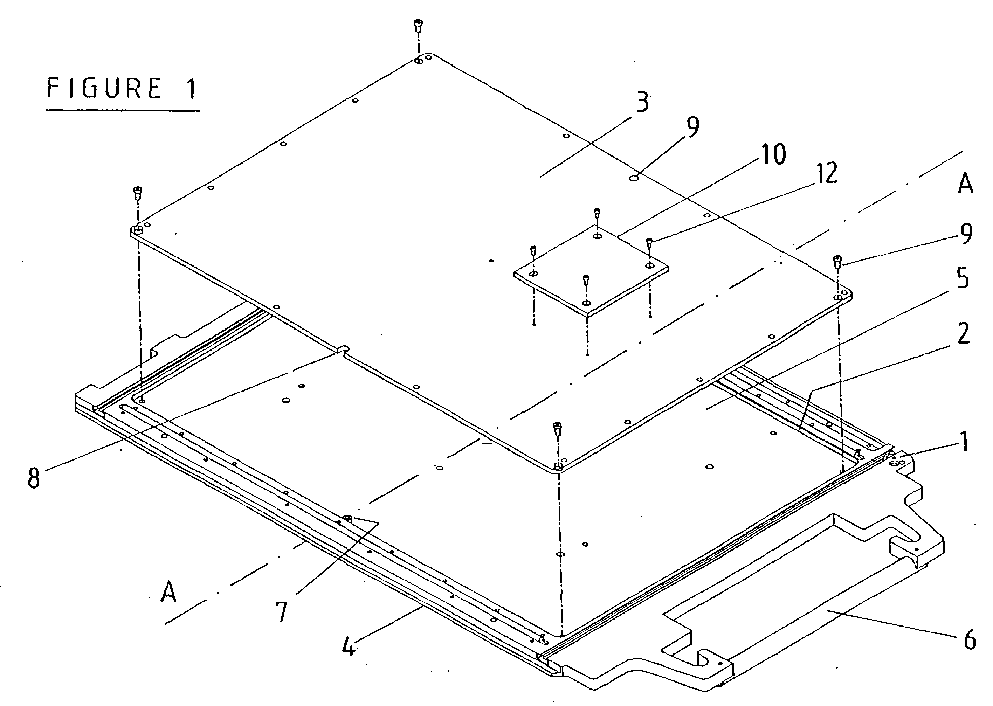

Le dispositif illustré par la figure 1 comporte un châssis 1 destiné à être monté coulissant dans une presse (non représentée) pour le transfert et l'impression à chaud de films métalliques sur des substrats constitués généralement par des découpes de papier ou de carton destinées notamment à former des emballages cartonnés. A cet effet, ce châssis est conçu comme un tiroir comprenant un logement rectangulaire 5 délimité par un rebord 2 destiné à recevoir une plaque de chauffage et de support 3 et dont la hauteur correspond à l'épaisseur de cette plaque de support et de chauffage 3. Les moyens de chauffage de la plaque de support et de chauffage 3 font partie de la presse dans laquelle ce châssis 1 est monté coulissant. Ces moyens ne font donc pas partie de la présente invention, il ne sont pas nécessaires à sa compréhension et ne sont, de ce fait, pas représentés.

Ce châssis coulissant 1 comporte encore deux rails latéraux 4 paralléles disposés le long de deux bords opposés de ce châssis, de sorte qu'un seul de ces rails 4 est visible sur la figure 1, pour permettre son montage par coulissement dans la presse d'impression susmentionnée.

Ce châssis 1 est encore muni, à l'instar d'un tiroir, d'une poignée 6 pour permettre de l'enlever et de le charger sur la presse susmentionnée en faisant coulisser les rails latéraux 4 dans des guides correspondants (non représentés) de cette presse.

Le logement 5 de ce châssis coulissant 1 comporte deux goupilles de positionnement 7 (dont seule l'une est visible sur la figure 1) alignées dans l'axe de défilement A-A des feuilles ou découpes de papier ou de carton par rapport au châssis coulissant 1, cet axe étant donc transversal à l'axe de coulissement de ce châssis 1 dans la presse, tel qu'il est défini par les rails latéraux 4. Ces chevilles sont destinées à coopérer respectivement avec une encoche de positionnement 8, ménagée le long d'un bord de la plaque de support et de chauffage 3 et avec une ouverture 9, ménagée à proximité du bord opposé de cette même plaque 3. Quatre vis 9 disposées aux quatre angles de cette plaque de support et de chauffage 3 servent à la fixer sur le châssis coulissant 1.

La plaque de support et de chauffage 3 est, hormis les trous servant à son positionnement et à sa fixation, une plaque à surface continue, destinée à recevoir un ou plusieurs outils 10 pour le découpage et le transfert de portions de feuilles métalliques en des endroits déterminés des feuilles ou découpes de papier ou de carton. Ces outils 10, qui jouent le rôle de clichés, sont constitués par des plaquettes de formes appropriées à celles des différents motifs à déposer sur le substrat.

Un de ces outils 10 est illustré par la figure 1, mais il peut évidemment y en avoir plusieurs, de différentes formes, répartis sur la plaque de support et de chauffage 3 en fonction des portions de films à transférer sur le substrat. Chacun de ces clichés 10 doit être positionné de manière trés précise sur la plaque de support et de chauffage 3 et ensuite, fixé à cette plaque 3.

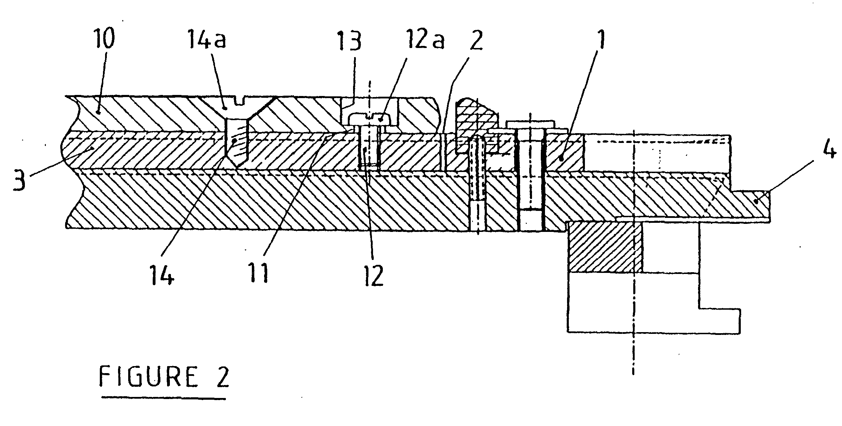

La figure 2 permet d'expliquer un mode de positionnement de ces clichés 10 sur la plaque de support et de positionnement 1. Le cliché 10 comporte donc des trous 11, dont un est visible sur la figure 2, destinés au passage de vis de fixation 12, dont la tête 12a prend appui au fond d'un logement annulaire 13 entourant le trou 11, destiné à noyer cette tête de vis 12a dans l'épaisseur de la plaque de support et de chauffage 3. Cette vis 12 est vissée dans la plaque de support et de chauffage 3. Comme le montre cette figure 2, les diamètres respectifs du trou 11 et du logement annulaire 13 sont sensiblement plus grands que ceux de la vis 12, respectivement de la tête 12a de cette vis 12.

Grâce à ce mode de fixation des clichés 10, une plage de réglage est ménagée par rapport à la position des vis de fixation 12 dans la plaque de support et de chauffage 3. Par conséquent, il suffit de déterminer la position de chacun des clichés 10, avec une approximation suffisamment bonne, sur la plaque de support et de chauffage 3. Cette position peut correspondre à la position de ces clichés 10 lorsque la plaque de support et de chauffage est à température ambiante. Une fois cette position déterminée, les clichés peuvent par exemple être maintenus provisoirement dans cette position à l'aide d'aimants disposés autour de ces clichés, ce qui permet d'effectuer le repérage de la position des filetages destinés aux vis 12 sur la plaque de support et de chauffage 3. Ensuite on ménage les trous filetés dans cette'plaque 3 et on peut visser les vis 12, fixant les clichés 10 dans une première position approximative.

A partir de cette position initiale des clichés 10, il est alors possible d'effectuer le réglage précis à chaud de leur position. A cet effet, il suffit d'effectuer une impression à chaud du ou des films métalliques sur les découpes de carton ou de papier. Généralement, cette impression à l'aide de films métalliques est effectuée sur des découpes préalablement gaufrées, de sorte que les positions respectives des portions de films métalliques imprimées doivent correspondre avec une très grande précision, inférieure à 0,1 mm, à celles des motifs formés par gaufrage. Pour effectuer le réglage de la position des clichés 10, il suffit donc d'évaluer le décalage entre l'empreinte de gaufrage et l'impression métallique qui lui est superposée et de corriger en conséquence la position des clichés respectifs 10.

Cette opération devra être répétée aussi longtemps que l'on constate des décalages visibles entre les empreintes de gaufrage et l'impression des films métalliques. Pour effectuer ces réglages, il suffit donc de desserrer les vis 12 et de déplacer les clichés, dans la direction appropriée, d'une valeur correspondant à l'écart constaté sur l'impression, après quoi il suffit de resserrer les vis 12.

En variante, on pourrait combiner les vis 12 à tête plate 12a permettant le réglage, avec des vis 14 à tête conique 14a comme illustré sur la figure 2. Dans ce cas, les trous filetés ménagés dans la plaque de support et de chauffage 3 destinés à ces vis 14 à tête conique 14a sont formés seulement après que la position précise des clichés a été déterminée comme expliqué précédemment. Ces vis à tête conique peuvent servir à garantir le maintien de la position de réglage précise des clichés 10.

Lorsque l'on veut utiliser une autre disposition de clichés, pour effectuer un autre travail sur d'autres découpes, on dévisse simplement les quatre vis qui maintiennent la plaque de support et de chauffage 3 sur le châssis 1 et on la remplace par une autre plaque 3 munie de la configuration de clichés désirée. Etant donné que cette nouvelle plaque 3 comporte les mêmes repères de positionnement 8 et 9 que la précédente, la position de ses propres clichés n'a plus à être réglée, de sorte que le travail d'impression des films métalliques peut commencer dès que le changement de plaque a été effectué. La plaque de support et de chauffage 3 précédente est mise en réserve pour une utilisation ultérieure.

Le réglage ne doit donc être effectué qu'une seule fois pour une configuration donnée de clichés 10, ensuite il suffit de choisir parmi les plaques précédentes, la plaque de support et de chauffage 3 comportant la bonne configuration de clichés 10. Le dispositif de positionnement selon l'invention supprime donc toute opération de réglage lors des changements de travaux sur les presses de transfert et d'impression de films métalliques sur des substrats.

Le fait que la plaque de support et de chauffage 3 utilisée dans ce dispositif est une plaque pleine, c'est-à-dire une plaque sans nid d'abeilles, présente deux avantages par rapport aux plaques à nids d'abeilles de l'art antérieur. D'une part, elles sont beaucoup moins chères à fabriquer, de sorte qu'il devient possible et rentable de n'utiliser une plaque de support et de chauffage 3 que pour un seul travail et d'avoir autant de ces plaques 3 que l'on n'a de sortes de travaux à effectuer sur la presse, d'autre part, l'absence des rangées d'ouvertures formant le nid d'abeilles, permet d'augmenter la surface de contact entre la plaque de support et de chauffage 3 et les clichés 10 et donc d'améliorer le transfert thermique et ainsi, le rendement du chauffage des clichés.

Bien entendu, la présente invention n'est nullement limitée au mode de fixation qui a été décrit dans cet exemple. D'autres modes de fixation permettant, après desserrage, de modifier la position des clichés dans une certaine zone pour permettre le réglage de leur position peuvent être utilisés.

## Revendications

1. Dispositif pour le découpage et le transfert par pression à chaud de portions de films métalliques sur un substrat de papier ou de carton travaillé dans une presse au moyen d'outils (10) en forme de plaquettes, comprenant un châssis amovible (1) équipé d'une plaque de support et de chauffage (3) sur laquelle lesdits outils (10) sont positionnés et fixés par des moyens de fixation des outils (11-13), **caractérisé en ce que** ladite plaque de support et de chauffage comprend une surface d'échange thermique continue et est positionnée puis fixée sur le châssis amovible (1) par des moyens de positionnement de la plaque (7-9), et **en ce que** lesdits moyens de fixation (11-13) desdits outils (10) sont constitués d'organes admettant entre eux un jeu de réglage agencés pour permettre de fixer chacun desdits outils (10) dans n'importe quelle position à l'intérieur d'une zone de réglage déterminée à la surface de ladite plaque de support et de chauffage (3), pour permettre le réglage de la position, puis la fixation desdits outils (10) sur ladite plaque de support et de chauffage (3).

2. Dispositif selon la revendication 1, **caractérisé en ce que** lesdits moyens de fixation des outils (11-13) comportent des vis (12) à tête plate (12a), lesdits outils (10) comprenant, pour chacune desdites vis (12), une ouverture (11) dont le diamètre est sensiblement supérieur à celui de la vis (12), l'écart entre le diamètre de ladite ouverture (11) et celui de ladite vis (12) déterminant ledit jeu de réglage, le côté de cette ouverture (11) adjacent à la face externe de chacun desdits outils étant bordé par un logement annulaire (13) dont la hauteur correspond au moins à l'épaisseur de la tête (12a) de ladite vis (12) et dont le diamètre est supérieur à celui de cette tête (12a) en fonction dudit jeu de réglage.

3. Dispositif selon l'une des revendications précédentes, **caractérisé en ce qu'**en plus desdits moyens de fixation des outils (11-13), il comporte des moyens de fixation sans jeu constitués par une vis (14) à tête conique (14a) maintenant lesdits outils (10) dans une position réglée.

4. Dispositif selon l'une des revendications précédentes, **caractérisé en ce que** lesdits moyens (7-9) de positionnement de la plaque de support et de chauffage (3) sur ledit châssis amovible (1) comportent, d'une part sur ledit châssis (1) et d'autre part, sur ladite plaque de support et de chauffage (3), des goupilles (7) disposée le long d'une ligne correspondant à l'axe de passage desdits substrats dans ladite presse et des ouvertures (8, 9) calibrées pour s'engager sur lesdites goupilles (7).

## Patentansprüche

1. Vorrichtung für das Stanzen und die Heissdruckübertragung von Prägefolienteilen auf ein Substrat aus Papier oder Karton, welches mittels plattenförmigen Werkzeugen (10) in einer Presse verarbeitet wird, umfassend einen Schieberahmen (1), ausgestattet mit einer Träger- und Heizplatte (3), auf welcher die besagten Werkzeuge (10) positioniert und durch Befestigungsmittel der Werkzeuge (11-13) befestigt sind, **dadurch gekennzeichnet, dass** die besagte Träger- und Heizplatte eine kontinuierliche Wärmeaustausch-Oberfläche umfasst und auf dem Schieberahmen (1) durch Mittel zum Positionieren der Platte (7-9) positioniert und anschliessend befestigt wird, und dadurch, dass die besagten Befestigungsmittel (11-13) der besagten Werkzeuge (10) aus Organen bestehen, welche einen Einstellspielraum zwischen ihnen zulassen und so angeordnet sind, dass jedes der besagten Werkzeuge (10) in irgendeiner Position innerhalb eines auf der Oberfläche der besagten Träger- und Heizplatte (3) bestimmten Einstellbereichs befestigt werden kann, um die Position einstellen und anschliessend die besagten Werkzeuge (10) auf der besagten Träger- und Heizplatte (3) befestigen zu können.

2. Vorrichtung gemäss Patentanspruch 1, **dadurch gekennzeichnet, dass** die besagten Befestigungsmittel der Werkzeuge (11-13) Schrauben (12) mit Flachkopf (12a) enthalten, wobei die besagten Werkzeuge (10) für jede dieser Schrauben (12) eine Öffnung (11) umfassen, deren Durchmesser wesentlich grösser ist als derjenige der Schraube (12), und der Abstand zwischen dem Durchmesser der besagten Öffnung (11) und demjenigen der besagten Schraube (12) den Einstellspielraum bestimmen, wobei die an die Aussenfläche von jedem der besagten Werkzeuge angrenzende Seite dieser Öffnung (11) von einer ringförmigen Aufnahme (13) umgeben ist, deren Höhe mindestens der Dicke des Kopfes (12a) der besagten Schraube (12) entspricht und deren Durchmesser entsprechend von besagtem Einstellspielraum grösser ist als derjenige dieses Kopfes (12a).

3. Vorrichtung gemäss einem der vorerwähnten Patentansprüche, **dadurch gekennzeichnet, dass** sie zusätzlich zu den besagten Befestigungsmitteln der Werkzeuge (11-13) Befestigungsmittel ohne Spiel umfasst, bestehend aus einer Schraube (14) mit Senkkopf (14a), welche die besagten Werkzeuge (10) in einer eingestellten Position halten.

4. Vorrichtung gemäss einem der vorerwähnten Patentansprüche, **dadurch gekennzeichnet, dass** die besagten Mittel (7-9) zum Positionieren der Träger- und Heizplatte (3) auf dem besagten Schieberahmen (1) einerseits auf diesem Rahmen (1) und andererseits auf der Träger- und Heizplatte (3) Stifte (7) enthalten, welche entlang einer Linie angeordnet sind, die der Durchlaufachse der besagten Substrate in der besagten Presse entspricht, sowie Öffnungen (8, 9), die kalibriert sind, um die besagten Stifte (7) aufzunehmen.

## Claims

1. Device for the cutting and the hot-pressure transfer of metallic film portions onto a paper or cardboard substrate processed in a press by means of plate-shaped tools (10), comprising a removable frame (1) equipped with a supporting and heating plate (3) on which said tools (10) are positioned and secured by tool securing means (11 - 13), **characterized in that** said supporting and heating plate (3) comprises a continuous heat exchange surface and is positioned then secured on the removable frame (1) by plate positioning means (7 - 9), and **in that** said securing means (11 - 13) for said tools (10) consist of organs allowing an adjusting clearance between them, arranged so as to permit securing each of said tools (10) in any position within an adjusting range determined on the surface of said supporting and heating plate (3), in order to allow adjustment of the position, then the securing of said tools (10) on said supporting and heating plate (3).

2. Device according to claim 1, **characterized in that** said tool securing means (11 - 13) include screws (12) with flat head (12a), said tools (10) comprising, for each of said screws (12), an aperture (11) of a diameter substantially larger than the diameter of the screw (12), the spacing between the diameter of said aperture (11) and the diameter of said screw (12) determining the adjusting clearance, the side of this aperture (11) adjacent to the external surface of each of said tools being bordered by an annular seat (13) of a height corresponding at least to the thickness of the head (12a) of said screw (12) and of a diameter larger than the diameter of said head (12a) depending on said adjusting clearance.

3. Device according to one of the preceding claims, **characterized in that**, in addition to said tool securing means (11 - 13), it comprises securing means without clearance consisting of a screw (14) with countersunk head (14a) maintaining said tools (10) in an adjusted position.

4. Device according to one of the preceding claims, **characterized**
**in that** said positioning means (7 - 9) of the supporting and heating plate (3) on said removable frame (1) include, on the one hand on said frame (1) and, on the other hand on said supporting and heating plate (3), pins (7) positioned along a line corresponding to the axis of passage of said substrates in said press and apertures (8, 9) seized to engage said pins (7).
